# EUROPÄISCHE PATENTSCHRIFT

(11) **EP 0 390 735 B1**
(45) Veröffentlichungstag und Bekanntmachung des Hinweises auf die Patenterteilung: **07.02.1996**
(21) Anmeldenummer: 90810205.6
(22) Anmeldetag: 14.03.1990
(51) Int. Cl.: B65H 19/12, B65G 1/137, B65G 47/49

(54) **Automatische Anlage zum Einbringen von Papierrollen in die Rollenständer einer Rollenrotationsdruckmaschine**
Automatic plant for feeding paper rolls for printing presses
Installation automatique pour alimenter des bobines de papier dans une imprimerie

(30) Priorität: 31.03.1989 DE 3910444
(43) Veröffentlichungstag der Anmeldung: 03.10.1990
(73) Patentinhaber: Maschinenfabrik Wifag, CH-3001 Bern (CH)
(72) Erfinder: Rohrer, Jean, CH-3014 Bern (CH); Lehmann, Ernst, Ing. HTL, CH-3014 Bern (CH)
(74) Vertreter: Marx, Lothar

(56) Entgegenhaltungen:
- DE-A- 3 627 454
- DE-A- 3 739 222
- DE-A- 3 739 234

## Beschreibung

Die Erfindung betrifft eine automatische Anlage zum Einbringen von Papierrollen in die Rollenständer einer Rollenrotationsdruckmaschine der im Oberbegriff des Anspruchs 1 angegebenen Gattung.

Insbesondere in Zeitungsdruckereien muss die Versorgung der Rollenrotationsdruckmaschinen mit Papierrollen sehr sorgfältig geplant werden, um den Rollenständern zur gegebenen Zeit die richtigen Papierrollen zuzuführen. Dabei werden an die Organisation des zugehörigen "Rollenkellers" hohe Anforderungen hinsichtlich Zuverlässigkeit, Sicherheit und Ergonomie gestellt. Ausserdem müssen insbesondere das Gewicht einer solchen Papierrolle, der Zeitdruck und die Grundvoraussetzung berücksichtigt werden, dass nämlich jede Ausgabe vollständig und zeitgerecht erscheinen muss.

Es ist heute üblich, die Versorgung von Rollenrotationsdruckmaschinen mit Papierrollen so vorzunehmen, dass z.B. bei einer Tageszeitung tagsüber die Papierrollen an vorbestimmten Plätzen in einem sogenannten Rollenzwischenlager deponiert werden, von wo aus sie nachts, wenn gedruckt wird, bei Bedarf unter Verwendung von Transportmitteln, z.B. eines auf Schienen geführten Wagens, zu den Rollenständern gebracht werden, wo sie manuell ausgepackt und für die autom. Klebung vorbereitet werden. Aus ergonomischen Gründen werden heute auch vermehrt spezielle Auspack- und Klebestellenvorbereitungs-Stationen vor den Rollenständern angeordnet. Im Rollenständer selbst werden dann der Austausch der nahezu verbrauchten Rolle gegen die frische Rolle sowie das Verkleben und damit die Adaption der neu zugeführten Papierrolle an die Papierbahn, die durch die Rollenrotationsdruckmaschine läuft, vorgenommen. Die fast verbrauchte Restrolle wird aus dem Rollenständer entfernt und entsorgt. Um eine Blockierung der Versorgungswege zu vermeiden, ist in der Regel ein separater Entsorgungsweg vorgesehen.

Bei dem zuvor beschriebenen Rollenkellersystem ist der störungsfreie Betrieb der Rollenrotationsdruckmaschinen insbesondere von der Qualität der manuellen Arbeit einer Bedienungsperson abhängig. Fehler, die bei der Zuführung oder der Vorbereitung von Klebestellen von den Bedienungspersonen gemacht werden, können zu längeren Ausfallzeiten führen. Ausserdem kann die Handhabung der schweren Papierrollen mit relativ grossen körperlichen Anstrengungen verbunden sein.

Aus diesem Grund ist bei der Tokyoter Tageszeitung ASAHI SHIMBUN ein automatischer Rollenkeller konzipiert und in Betrieb genommen worden. Die Grundvoraussetzung hierbei ist allerdings eine Vereinheitlichung von Rollengrösse und Papierqualität, d.h., es werden nur Papierrollen einer Grösse mit einer identischen Verpackung verarbeitet.

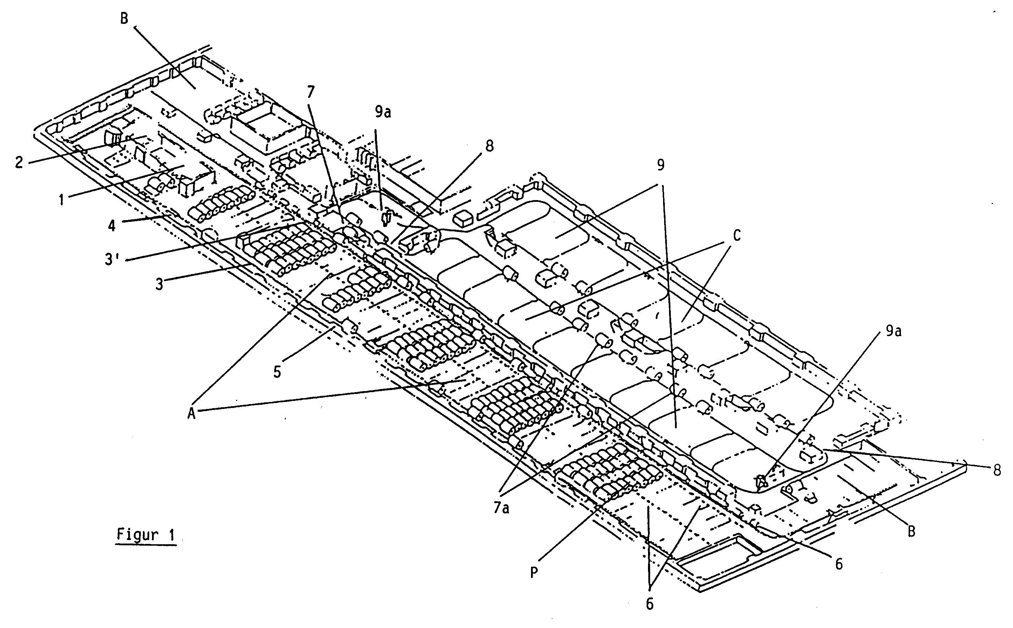

Dieses Rollenkellersystem soll im folgenden an Hand von Fig. 1 erläutert werden.

Der aus Fig. 1 ersichtliche Rollenkeller weist einen Hauptspeicher A, Ergänzungsspeicher B und einen Rollenständerraum C auf. Bei diesem Rollenkellersystem werden jeweils identische Papierrollen P über eine Aufgabestation 1 und einem Frachtheber 2 von einer ebenerdigen Papierrollenanlieferstation in den Rollenkeller transportiert und auf einem Transportband 3 dem Hauptspeicher A zugeführt. Entlang des Transportbandes 3 sind Drehtische 4, welche zur Gleichstellung der Abrollrichtung dienen, vorgesehen. Die Papierrollen P werden mit Stossvorrichtungen 5 vom Transportband 3 gestossen und dadurch auf dem abschüssigen Hauptspeicher A abgeladen. Dieser Hauptspeicher A weist schräge Führungsbahnen auf, auf denen in gewissen Abständen Pufferelemente 6 angeordnet sind, die die abrollenden Papierrollen P abbremsen sollen. Ein zweites Transportband 3' bringt die Papierrollen je nach Bedarf zu einer Beladungsstation 7, wo führerlose Transportfahrzeuge 7a (AGV's) automatisch mit den Papierrollen beladen werden. Diese führerlosen Transportfahrzeuge 7a fahren mit den Papierrollen im Kreisverkehr entlang einer durch eine Führungsschleife 8 vorgegebenen Strecke durch den gesamten Rollenständerraum C, um die benötigten Papierrollen P bei einer zu versorgenden Rollenrotationsdruckmaschine abzuladen. Sowohl das Auspacken als auch die Klebestellenvorbereitung werden von Robotern übernommen. Auch die Entsorgung der Restrollen 9 aus den Rollenständern erfolgt automatisch durch Roboter 9a.

Da die Transportfahrzeuge 7a nur in einer Richtung fahren können, ergeben sich lange Wegezeiten und ein grosser Platzbedarf. Ausserdem lässt sich dieses System aufgrund der eingesetzten Vorbereitungsroboter nur bei vereinheitlichter Papierrollengrösse und identischer Verpackung verwenden. Für eine nach europäischen Massstäben eingerichtete Druckerei, wo unterschiedliche Rollenbreiten und Rollendurchmesser sowie unterschiedliche Papierqualitäten verwendet werden, ist dieses System nicht geeignet.

Weiterhin ist bei diesem Rollenkellersystem kein geregelter Notbetrieb möglich, da einerseits die Transportwege, die mittels der führerlosen Transportwagen zurückzulegen sind, sehr gross sind und andererseits das Personal keine Praxis in der Führung der beladenen und der unbeladenen führerlosen Transportfahrzeuge hat. Hier würden Fehlfunktionen zwangsläufig zu einer stark reduzierten Auflage oder gar zu einer Einstellung des Druckbetriebes führen. Und schließlich kann der Hauptspeicher A nur mit "first in first out" arbeiten.

Eine automatische Anlage zum Einbringen von Papierrollen in die Rollenständer einer Rollenrotationsdruckmaschine der angegebenen Gattung geht aus der DE-A-36 27 454 hervor und weist ein Transportsystem für die Förderung einer Papierrolle von einem Rollenzwischenlager zu einem Zwischenlagerplatz, ein Rollentransfersystem für die Überführung der Papierrollen von dem Zwischenlagerplatz zu dem ausgewählten Rollenständer, Hubvorrichtungen für das Einsetzen der Papierrollen in die Rollenständer sowie eine Klebestellenvorbereitung auf. Auch bei dieser Anlage läßt jedoch die Flexibilität zu wünschen übrig, da die Klebenstellenvorbereitung an dem Zwischenlagerplatz in unmittelbarer Nähe des Rollenständers oder aber im Rollenständer selbst erfolgen muß, was nur in Notfällen der Fall sein wird.

Der Erfindung liegt die Aufgabe zugrunde, eine automatische Anlage zum Einbringen von Papierrollen in die Rollenständer einer Rollenrotationsdruckmaschine der angegebenen Gattung zu schaffen, die sehr platzsparend, flexibel und zuverlässig betrieben werden kann.

Diese Aufgabe wird erfindungsgemäß durch den Gegenstand des Anspruchs 1 gelöst.

Zweckmäßige Ausführungsformen werden durch die Merkmale der Unteransprüche definiert.

Die mit der Erfindung erzielten Vorteile beruhen darauf, daß eine solche Anlage alle in der Praxis auftretenden Typen von Papierrollen mit jedem, nach dem Stand der Technik möglichen Automatisierungsgrad verarbeiten kann, so daß Flexibilität bezüglich der zu verarbeitenden Rollentypen, des Personaleinsatzes in der Tages- oder Nachtschicht sowie des Automatisierungsgrades besteht. Außerdem kann eine solche Anlage, je nach Ausrüstungsgrad, praktisch beliebig manuell oder automatisch betrieben werden, womit der Produktionsausstoß mit großer Zuverlässigkeit gewährleistet ist.

Auch die von den Arbeitsschutzbestimmungen geforderte Sicherheit und Ergonomie des Bedienungspersonals bereiten keine Probleme.

Bei dieser Anlage werden Papierrollen verarbeitet, die mit einem maschinenlesbaren Code versehen sind, der Papierrollendaten enthält, nämlich insbesondere Rollengewicht, Flächengewicht, Papierqualität und Vorbereitungsgrad. Diese Papierrollen werden einem Rollenhauptlager zugeführt. Ein von einem Steuersystem gesteuertes Transportsystem bringt die gewünschte Papierrolle aus dem Rollenhauptlager in das Rollenzwischenlager. Dort wird sie von einem zweiten Transportsystem mit wahlfreiem Zugriff zu den Plätzen des Rollenzwischenlagers übernommen und eingelagert, wobei das Steuersystem, z.B. über einen Bar-Code-Leser, Informationen über die Papierrolle (Abmessungen, Papierqualität) und den Ort abspeichert, an dem diese Papierrolle im Rollenzwischenlager abgelegt worden ist. Vom Rollenzwischenlager aus werden die Papierrollen über das zweite Transportsystem an ein drittes Transportsystem, das insbesondere ein geradliniges und vollautomatisch steuerbares Schienenrollwagensystem ist, übergeben. Die Papierrollen werden sodann mittels dieses Schienenrollwagensystems den Rollenständern zugeführt. Die Beladung des Rollenständers einer Rotationsdruckmaschine wird mit einer vom Steuersystem kontrollierten Hubeinrichtung vorgenommen. Auch das Entladen der Rollenkerne beziehungsweise Restrollen wird von diesem Hubsystem automatisch übernommen. Entlang der Transportwege der Papierrollen können Auspack- und Klebestellenvorbereitungs-Stationen zur Entfernung der äusseren Umhüllung der Papierrollen und zur Vorbereitung der Klebestellen sowie Rollenständer-Pufferplätze angeordnet werden.

Sollen gewisse Arbeiten nicht vollautomatisch durchgeführt werden, so ist es von Vorteil, die Auspack- und Klebestellenvorbereitungs-Stationen und die Entsorgungsstationen entlang der Bahn des führerlosen Transportwagensystems vor den Rollenständern vorzusehen.

Die vorgeschlagene Anlage kann grundsätzlich beliebig automatisiert werden. Je nach den Platzverhältnissen und dem Platzbedarf für die Automaten der Auspack- und Klebstellenvorbereitungs-Stationen, kann es vorteilhaft sein, diese nicht vor den Rollenständern, sondern im Bereich des Rollenzwischenlagers zentral anzuordnen.

Im Sinne eines flexiblen Einsatzes sind mit der vorgeschlagenen Anlage drei Ablaufvarianten möglich. So können die zwischengelagerten Rollen einerseits während der Nachtschicht vorbereitet und anschliessend direkt den Rollenständern zugeführt werden, während andererseits auch eine Rollenvorbereitung in der Tagesschicht mit anschliessender Zwischenspeicherung möglich ist, wobei dann die vorbereiteten Rollen in der Nachtschicht vom Zwischenlager ohne Vorbereitungsoperationen zu den Rollenständern gelangen. Des weiteren können die Rollenständer auch mit vor dem Rollenzwischenlager vorbereiteten Rollen beschickt werden. Für den Fall, dass in der Schicht mit der Rollenvorbereitung keine oder nur reduzierte Produktionen vorgesehen sind, wäre auch eine Rollenvorbereitung in den Rollenständer möglich, so dass spezifische Auspack- und Klebstellenvorbereitungs-Stationen gänzlich entfallen könnten.

Um die in den Rollenträgern anfallenden nicht vollständig abgelaufenen, d.h. angebrauchten Papierrollen, wieder verwenden zu können, müssen diese ins Rollenzwischenlager zurückgeführt werden. Um dieses zu ermöglichen, wird das vorhandene Steuersystem, das die rückzuführende Rolle noch gespeichert hat, diese über das dritte Transportsystem dem zweiten Transportsystem zuleiten, wo die Rollen dann im Rollenzwischenlager abgelegt werden.

Für den Fall, dass die angebrauchten Rollen vorübergehend aus dem System entnommen werden, besteht die Möglichkeit, die Rollen mit einer Bar-Code-Etikette zu versehen, welche am entsprechenden Rollenständer ausgegeben wird. Diese Etikette kann beim Wiedereintritt der Rolle ins System von einem entsprechenden Bar-Code-Leser erfasst werden.

Um die Verwaltung der gesamten Rollenzuführung inklusive Zwischenspeicherung noch zuverlässiger zu machen, ist es von Vorteil, das Steuersystem aus mindestens zwei parallel arbeitenden, elektronischen Rechenanlagen aufzubauen, die unabhängig voneinander, jede für sich in der Lage sind, den Ablauf der Anlage zu steuern. Mit Hilfe dieses redundanten Steuersystemes wird die Wahrscheinlichkeit eines Totalausfalles zusätzlich reduziert.

Da jede Komponente der vorgeschlagenen Anlage für sich ein Substeuersystem sowie z.B. elektrische Antriebsmotoren benötigt, ist es von Vorteil, alle Komponenten so zu gestalten, dass im Notfall noch ein manueller Betrieb der Komponenten möglich ist. So können zum Beispiel die Rollwagen sowohl automatisch als auch durch menschliche Körperkraft angetrieben Papierrollen vom Rollenzwischenlager zu den Rollenständern befördern.

Um die Zuverlässigkeit der vorgeschlagenen Anlage weiter zu erhöhen, wird nach einer bevorzugten Ausführungsform zwischen dem Rollenzwischenlager und den daran anschliessenden Auspack- und Klebestellenvorbereitungs-Stationen eine befahrbare Zone angeordnet, die in Notfällen, bzw. bei Fehlfunktionen, den Einsatz von zusätzlichen Mitteln, wie z.B. externen Fahrzeugen, ermöglicht.

Die vorgeschlagene Anlage erlaubt es, zu jedem Zeitpunkt auf jeden Papierrollentyp zuzugreifen. Diese Möglichkeit ist für den westlichen Markt (abgesehen von Japan) eine absolute Notwendigkeit, da in vielen Druckereien oft mehr als zehn verschiedene Papierrollentypen verwendet werden.

Zur Bestückung des Rollenzwischenlagers können vorteilhafterweise Hubstapler in Kombination mit einem Deckenkran eingesetzt werden, mit denen es möglich ist, die Papierrollen schonend zu greifen und in nahezu jeder beliebigen Lage abzusetzen.

Um die im Rollenzwischenlager befindlichen Papierrollen, die bereits mit den erforderlichen Klebestellen versehen worden sind, beim Transport entsprechend schonungsvoll zu behandeln, kann das zweite Transportsystem, insbesondere eine Krananlage, die Rollen entweder am Umfang mit Gabelgreifern oder stirnseitig mit Achszapfen am Rollenkern greifen.

Die Geräte zum Lesen der auf den Papierrollen angebrachten Code werden vorteilhafterweise vor dem Rollenzwischenlager angeordnet.

Eine zentrale Entsorgung der im Rollenkeller anfallenden Papierabfälle sollte in der Reichweite des Rollenzwischenlagerkrans liegen, so dass die Abfälle über die Versorgungswege auch entsorgt werden können.

Die Erfindung wird im folgenden anhand von Ausführungsbeispielen unter Bezugnahme auf die beiliegenden, schematischen Zeichnungen näher erläutert. Es zeigen:
- Fig. 2: eine Draufsicht auf einen Rollenzuführraum zur Ausführung einer bevorzugten Variante,
- Fig. 3: eine Abwandlung der Variante nach Figur 2,
- Fig. 4: einen Schnitt durch den Rollenzuführraum gemäss der Figur 2
- Fig. 5: eine weitere Variante des Rollenzuführraums nach Figur 2,
- Fig. 6: einen Rollenzuführraum zur Ausführung einer weiteren bevorzugten Variante,
- Fig. 7: eine Abwandlung des Rollenzuführraums für die Variante nach Figur 6, und
- Fig. 8: einen Schnitt durch den Rollenzuführraum nach Figur 6.

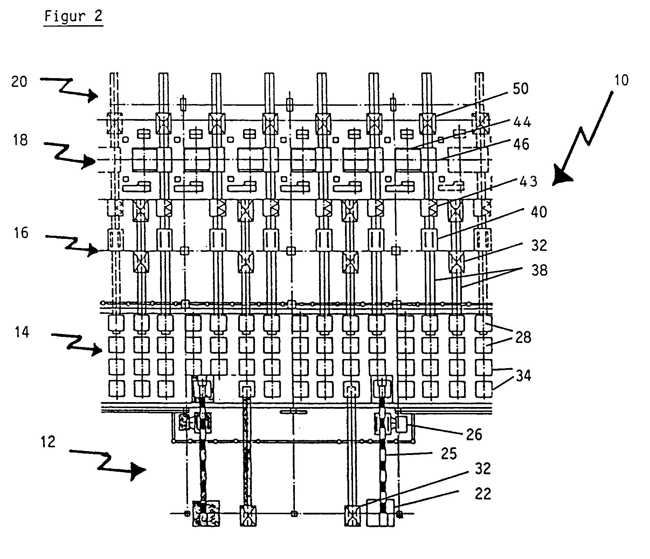

Der in Fig. 2 allgemein durch das Bezugszeichen 10 bezeichnete Rollenzuführraum weist insgesamt fünf Teilbereiche auf. Der erste Bereich 12 dient zum Umladen der Papierrollen 28 aus dem Rollenhauptlager (hier nicht dargestellt) in das Rollenzwischenlager 14, welches den zweiten Bereich bildet. Der erste Bereich 12 enthält zumindest eine Aufgabestation 22 mit einem nicht dargestellten Hubstapler.

Dieser hebt die Papierrollen 28 auf ein Transportband 25, das die Papierrollen 28 vorbei an einem Bar-Code-Leser 26 zu einem Platz für die Uebernahme der Papierrollen 28 in das Rollenzwischenlager 14 befördert. Zur Abfallentsorgung ist in diesem Bereich zumindest eine Entsorgungsstation 32 vorgesehen.

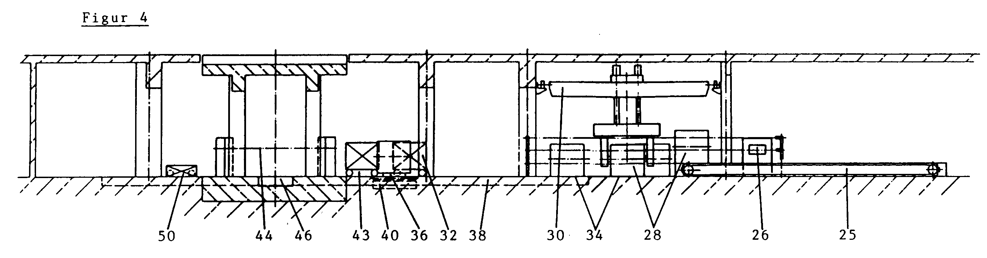

Im Rollenzwischenlager 14 werden die Papierrollen 28 mit der Kraneinrichtung 30 (Fig. 4) auf genau festgelegten Entnahmeplätzen 34 abgelegt, deren Lagen von dem zentralen Steuerungssystem überwacht und gespeichert werden. Von dort aus werden die Papierrollen 28 bei Bedarf über eine Kraneinrichtung 30 (hier nicht abgebildet) auf führerlose Rollenwagen 36 (hier nicht abgebildet), abgeladen. Mit den Rollenwagen 36 werden die Papierrollen 28 über kurze Schienenwege 38 zu den Auspack- und Klebestellenvorbereitungsstationen 40 befördert. Die Rollenwagen 36, die Schienenwege 38 und die Auspack- und Klebestellenvorbereitungs-Stationen 40 gehören bereits zum dritten Bereich 16 des Rollenzuführraums 10. Auch Pufferplätze 43 sind in diesem dritten Bereich angelegt. Hier sind die mit Klebestellen vorbereiteten Rollen in Warteposition, nachdem bei den Auspack- und Klebestellenvorbereitungs-Stationen 40 die Verpackung sowie beschädigtes Papier entfernt und die Klebstellen vorbereitet worden sind.

Sind diese verfahrenstechnischen Vorgänge beendet, so können die Papierrollen 28 an den vierten Bereich 18 weitergegeben werden.

In diesem vierten Bereich 18 werden die vorbereiteten Papierrollen unter Verwendung der Rollenwagen 36 zu den Hubvorrichtungen 46 transportiert, welche die mitunter tonnenschweren Papierrollen 28 auf einen vorgegebenen Platz der einzelnen Rollenständer 44 an den verschiedenen Druckmaschinen heben. Die gleiche Hubvorrichtung 46 entfernt auch die Restrollenkerne nach der Verarbeitung des Papiers und fördert diese über eine Verlängerung des Schienenweges 38 in den fünften Bereich 20, der Restrollenentsorgungs-Stationen 50 enthält.

Die meisten der vorgenannten Schritte können vollautomatisch ablaufen. Dies führt zu einem kontinuierlichen und effektiven Betrieb, der von mindestens einem zentralen Steuersystem (hier nicht dargestellt) überwacht und kontrolliert wird. Der Rollenzuführraum 10 ermöglicht jedoch auch durch redundante Auslegung sämtlicher Komponenten der Bereiche 12, 14, 16, 18 und 20 einen Notbetrieb, so dass das Bedienungspersonal diese Komponenten manuell betätigen und damit weitergedruckt werden kann.

Der angefallene Abfall in den Entsorgungsbehältern 32 kann über Schienenwege 38 und Krananlage 30 dem Bereich 12 dezentral zur Entsorgung zugeführt werden. Die Entsorgungsbehälter werden dann den gleichen Weg zurück an ihre Ausgangsposition gebracht.

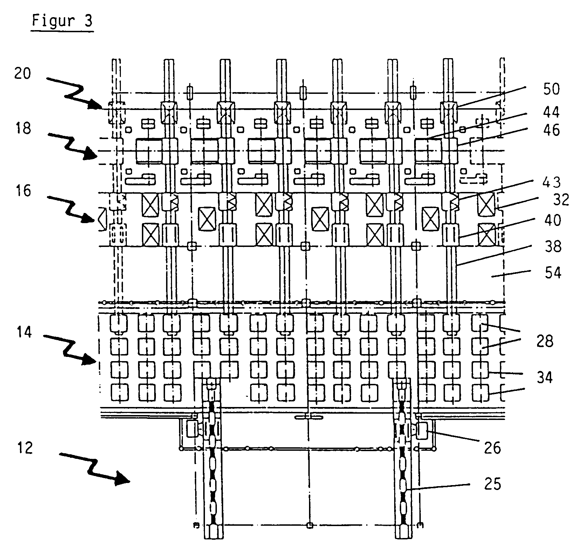

Der aus Figur 3 ersichtliche Rollenzuführraum unterscheidet sich von dem Rollenzuführraum 10 nach Fig. 2 nur dadurch, dass eine zusätzliche befahrbare Zone 54 vorgesehen ist, welche die Zugänglichkeit verbessert.

Der in Figur 4 dargestellte Querschnitt des Rollenzuführraumes 10 nach Fig. 2 zeigt das Transportband 25, welches an den hier nicht sichtbaren Aufgabestationen 22 mit ebenfalls hier nicht sichtbaren Hubstaplern mit Papierrollen 28 beladen wird, die dann vorbei an dem Bar-Code-Leser 26 in den Aktionsbereich der Kraneinrichtung 30 transportiert werden. Hier nimmt die Kraneinrichtung 30 die Papierrollen auf, um sie an vorbestimmten Entnahmeplätzen 34 abzustellen. Von den Entnahmeplätzen 34 werden die Papierrollen bei Bedarf von der Kraneinrichtung 30 rechnergesteuert abgehoben und auf Rollenwagen 36 abgestellt, die dann entlang des Schienenweges 38 die Papierrollen 28 zu den Auspack- und Klebestellenvorbereitungs-Stationen 40 transportieren. An diesen Stationen stehen fahrbare Abfallentsorgungsstationen 32, um die bei den Auspack- und Klebestellenvorbereitungs-Arbeiten anfallenden Abfälle aufzunehmen. Die fertig vorbereiteten Papierrollen 28 werden anschliessend zu den Rollenständern 44 transportiert. Dies geschieht wiederum unter Zuhilfenahme der Rollenwagen 36 und der Schienenwege 38. Die Papierrollen 28 werden sodann mit Hilfe der Hubvorrichtung 46 in die Tragarme des Rollenständers gebracht. Die verbrauchten Papierrollen bzw. die Restrollen werden von der gleichen Hubvorrichtung 46 aus den damit freiwerdenden Tragarmen gehoben. Diese Restrollen werden dann mit den Rollenwagen 36 entlang des Schienenweges 38 zur Restrollenentsorgungs-Station 50 transportiert und dort abgelegt.

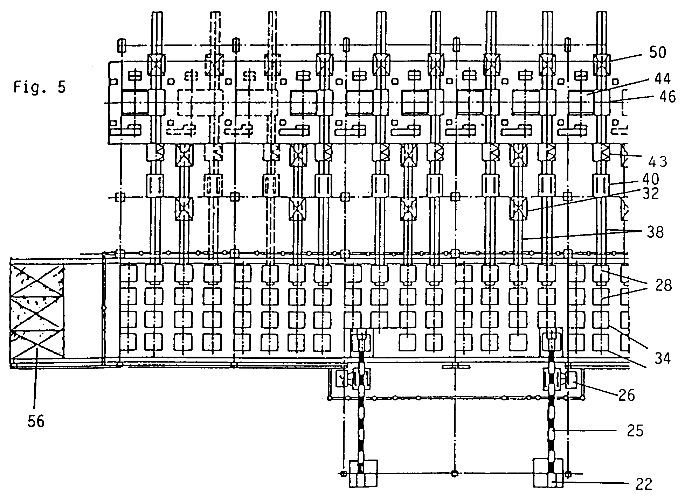

Der aus Figur 5 ersichtliche Rollenzuführraum unterscheidet sich von den in den Figuren 2 und 3 dargestellten Rollenzuführräumen dadurch, dass die Restrollen zur Abfallentsorgung zurück entlang des Schienenweges 38 und über die Kraneinrichtung 30 zu Abfallcontainern 56 transportiert werden, wo der gesamte Produktionsabfall zentral gesammelt wird.

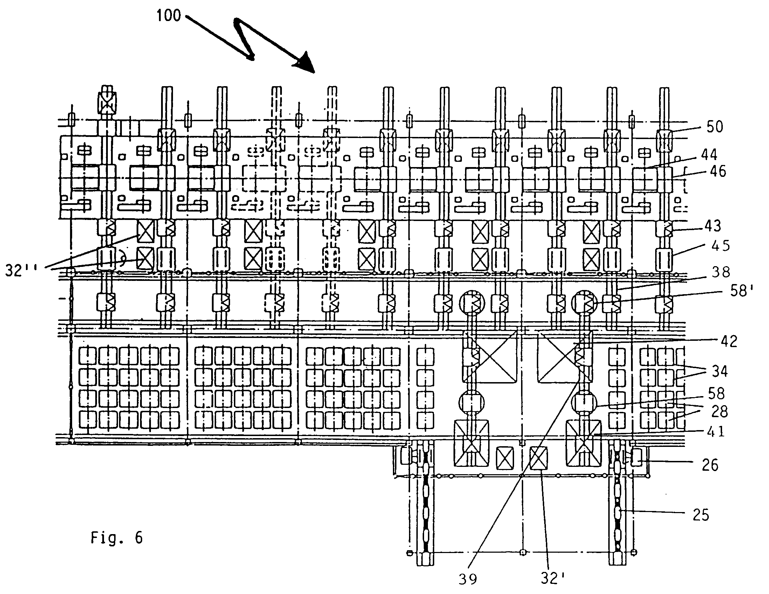

Der aus Figur 6 ersichtliche vollautomatische Rollenzuführraum, welcher allgemein mit dem Bezugszeichen 100 gekennzeichnet ist, zeigt die weitestgehend automatisierte Variante mit, nach heutigem Stand der Technik, relativ platzintensiven Auspack- und Klebestellenvorbereitungsautomaten 41, 42.

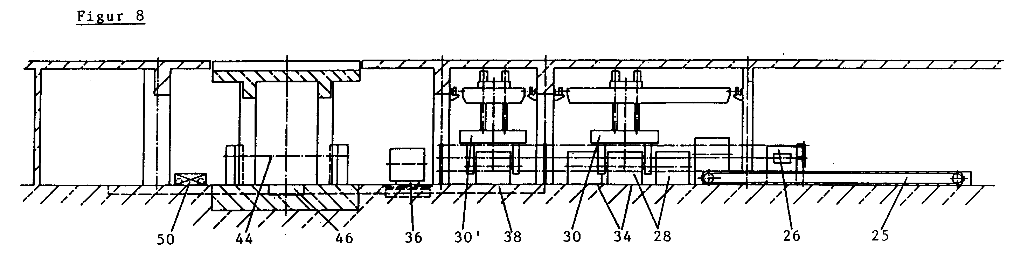

Der Weg, der von den Papierrollen 28 im vollautomatischen Rollenzuführraum 100 zurückgelegt wird, beginnt wiederum bei der hier nicht dargestellten Aufgabestation 22 mit dem Hubstapler. Dort werden die Papierrollen auf das Transportband 25 gelegt, von welchem die Papierrollen an dem Bar-Code-Leser 26 vorbei in die Reichweite der Kraneinrichtung 30 transportiert werden (wie aus Figur 8 ersichtlich ist). Die Kraneinrichtung legt die Papierrollen 28 auf vorbestimmten Entnahmeplätzen 34 ab.

Bei Bedarf werden die Papierrollen 28 zu einer Uebergabestelle 58 transportiert, von wo aus die Papierrollen mit Rollenwagen 36 zu einer vollautomatisierten Anspackstation 41 transportiert werden. Hier werden die Papierrollen 28 automatisch ausgepackt. Der Abfall, der dabei anfällt, wird in die Container einer Entsorgungsstation 32' deponiert.

Die so vorbereitete Papierrolle 28 wird nun über einen Schienenweg 39, über die Ablagestelle 58 hinweg zu einem Klebestellenvorbereitungsautomaten 42 transportiert. Hier wird die Papierrolle von beschädigtem weissem Papier befreit und die Klebestelle funktionsbereit fertiggestellt. Die Papierrollen 28 sind nunmehr soweit fertig vorbereitet, dass sie zum Einsetzen in die Rollenständer 44 bereit sind und werden nun auf der Verlängerung des Schienenweges 39 zu einer Uebergabestelle 58' weitergeleitet, wo sie sich im Arbeitsbereich der Kraneinrichtung 30', welche aus Fig. 8 ersichtlich ist, befinden.

Die Kraneinrichtung 30' transportiert die Papierrollen zu den gewünschten Schienenwegen 38, wo die Papierrollen auf Rollenwagen 36 abgelegt werden. Die Rollenwagen 36 bringen die Papierrollen 28 über Schienenwege 38 vorbei an einer Auspack- und Klebestellenvorbereitungs-Notstation 45 zu den Rollenständern 44 und damit zu den Hubvorrichtungen 46. Die Notstationen 45 werden nur für den Fall benötigt, dass die entsprechenden Automaten ausfallen. Hier anfallender Abfall wird in fahrbaren Entsorgungsstationen 32'' deponiert. Die Funktionsweise, der Verfahrensablauf im Bereich der Rollenständer 44 und der Hubvorrichtungen 46 sowie der Restrollenentsorgungsstationen 50 entspricht den in den Fig. 2 und 3 dargestellten Rollenzuführräumen.

Die vorbereiteten Rollen 28 können von der Klebstellenvorbereitungsstation 42 zurück auf die Uebergabestelle 58 transportiert werden und von da mit der Kraneinrichtung 30 an die Schienenwege 38 übergeben werden. Diese Ausführungsvariante erübrigt die Krananlage 30', ist aber mit einer Kapazitätseinbusse in der Rollenvorbereitung verbunden, weil die Abtransport- und Zubringeroperation nicht überlappt erfolgen kann.

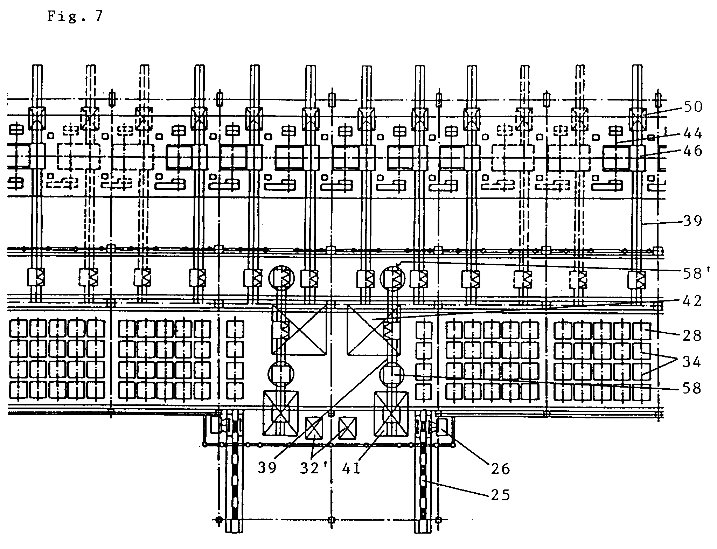

Die in Figur 7 und 8 dargestellte Abwandlung des Rollenzuführraumes nach Figur 6 enthält keine Auspack- und Klebestellenvorbereitungs-Notstationen sowie die zugehörigen Entsorgungsstationen mehr, da hier die Auspack- und die Klebestellenvorbereitungsautomaten 41/42 die notwendige Redundanz aufweisen. Die Funktion der Rollenständer 44 sowie der Hubvorrichtungen 46 und der Restrollenentsorgungsstationen 50 läuft, wie bereits vorstehend beschrieben, ab.

Ein wichtiges Merkmal aller vorstehenden Varianten, sowie aller vorstehend beschriebenen Rollenzuführräume 10, 100 ist das automatische Steuer- bzw. Rollenzuführsystem, welches die Ver- und Entsorgung der Rollenrotationsdruckmaschinen kontrolliert. An dem Bar-Code-Leser 26 nimmt das Steuersystem Informationen über den Typ der Papierrolle und die Art des Papieres auf und steuert die Kraneinrichtung 30 zu einem vorbestimmten und abgespeicherten Entnahmeplatz 34, wo die Papierrolle bis zum Gebrauch ruht. Dabei ist wichtig, dass jede Papierrolle 28 zu jedem Zeitpunkt verfügbar ist. Aus Redundanzüberlegungen besteht das Steuersystem aus mindestens zwei parallel arbeitenden aber unabhängigen Datenverarbeitungs- bzw. Steueranlagen.

Die nach diesem Prinzip arbeitende Grundvariante lässt sich stufenweise bis hin zu einem vollautomatisierten Betrieb ausbauen, ohne dass die weiterlaufende Produktion eingeschränkt wird.

## Patentansprüche

1. Automatische Anlage zum Einbringen von Papierrollen (28) in die Rollenständer (44) einer Rollenrotations-Druckmaschine
a) mit einem Transportsystem (25, 30) für die Förderung einer Papierrolle (28) von einem Rollenlager zu einem Zwischenlagerplatz (34),
b) mit einem Rollentransfersystem (14, 38, 39) für die Überführung der Papierrollen (28) von dem Zwischenplatz (34) zu dem ausgewählten Rollenständer (44),
c) mit Hubvorrichtungen (46) für das Einsetzen der Papierrolle (28) in den Rollenständer (44), und
d) mit einer Klebestellenvorbereitung (40, 41, 42),
**gekennzeichnet durch** die folgenden Merkmale:
e) eine Fördereinrichtung (25) und ein Kransystem (30) bringen die Papierrolle (28) zu einem Platz des als Rollenzwischenlager mit wahlfreiem Zugriff ausgebildeten Rollenlagers (14), dessen Koordinaten mit den Papierrollendaten, nämlich dem Vorbereitungsgrad und insbesondere zusätzlich Rollengewicht, Flächengewicht und Papierqualität korreliert sind und über Datenerfassungsgeräte gemeinsam erfaßt und verwaltet werden;
f) das in dem Transportzwischenlager (14) vorgesehene Kransystem (30) transportiert die Papierrolle (28) von dem Rollenzwischenlager (14) zu einem Rollwagensystem (38, 39), das
f1) eine Papierrolle (28) ohne Klebestelle zu der Klebestellenvorbereitung (40, 41, 42) und
f2) eine Papierrolle (28) mit Klebestelle direkt zu der Hubvorrichtung (46) eines ausgewählten Rollenständers (44) bringt;
g) das Rollwagensystem (38, 39) bringt die fertig vorbereitete Papierrolle (28) von der Klebestellenvorbereitung (40, 41, 42) direkt zu der Hubvorrichtung (46) des Rollenständers (44); oder
h) das Rollwagensystem (38, 39) und das Kransystem (30) bringen die fertig vorbereitete Papierrolle (28) von der Klebestellenvorbereitung (40, 41, 42) direkt zurück zu einem Platz (34) des Rollenzwischenlagers.

2. Anlage nach Anspruch 1, dadurch gekennzeichnet, daß die Fördereinrichtung (25) als Transportband (25) ausgebildet ist.

3. Anlage nach einem der Ansprüche 1 oder 2, dadurch gekennzeichnet, daß als Datenerfassungsgerate Bar-Code-Leser (26) verwendet werden.

4. Anlage nach einem der Ansprüche 1 bis 3, dadurch gekennzeichnet, daß jedem Rollenständer (44) eine dezentrale Auspack- und Klebestellenvorbereitung (40) zugeordnet ist, die über das Rollwagensystem (38) mit den Papierrollen (28) versorgt wird.

5. Anlage nach einem der Ansprüche 1 bis 3, dadurch gekennzeichnet, daß die Papierrollen (28) durch das Rollwagensystem (39) einer zentralen Umladestation (41, 42) zugeführt werden, die als zentrale Auspack- und Klebestellenvorbereitungsstation dient.

6. Anlage nach einem der Ansprüche 1 bis 5, dadurch gekennzeichnet, daß eine sich in einem Rollenständer (44) befindende Papierrolle (28), die wiederverwendbar ist, über das Rollenwagensystem (38, 39) und das Kransystem (30) aus dem Rollenständer (44) in das Rollenzwischenlager (14) oder in ein weiteres Zwischenlager (20) zurückgebracht wird.

7. Anlage nach einem der Ansprüche 1 bis 6, dadurch gekennzeichnet, daß das Kransystem (30) als Deckenkran (30) ausgebildet ist.

8. Anlage nach einem der Ansprüche 1 bis 7, dadurch gekennzeichnet, daß zwischen dem Rollenzwischenlager (14) und den Rollenständern (44) ein zusätzlicher, zugänglicher Freiraum (34) vorgesehen ist.

9. Anlage nach einem der Ansprüche 5 bis 8, dadurch gekennzeichnet, daß die zentrale Auspack- und Klebestellenvorbereitungsstation (41, 42) Klebestellenautomaten aufweist.

10. Anlage nach einem der Ansprüche 4 bis 9, dadurch gekennzeichnet, daß bei Ausfall des Kransystems (30) und/oder der zentralen Auspack- und Klebestellenvorbereitungsstation (41, 42) die Papierrollen (28) den dezentralen Umladestationen (40) bzw. direkt den Rollenständern (44) zugeführt werden, und daß die Papierrollenvorbereitung einschließlich Klebestellenvorbereitung manuell erfolgt.

11. Anlage nach einem der Ansprüche 1 bis 10, gekennzeichnet durch ein redundantes Steuersystem mit mindestens zwei elektronischen Rechenanlagen, so daß bei Fehlfunktion oder Ausfall einer elektronischen Rechenanlage die andere Rechenanlage die Steuerfunktion allein übernimmt.

12. Anlage nach einem der Ansprüche 1 bis 11, dadurch gekennzeichnet, daß das Kransystem (30, 30') die Papierrollen (28) mit Gabelgreifern am Umfang erfaßt.

13. Anlage nach einem der Ansprüche 1 bis 11, dadurch gekennzeichnet, daß das Kransystem (30, 30') die Papierrollen (28) stirnseitig erfaßt.

14. Anlage nach Anspruch 13, dadurch gekennzeichnet, daß das Kransystem (30, 30') die Papierrollen (28) stirnseitig mit Achszapfen am Rollenkern erfaßt.

15. Anlage nach einem der Ansprüche 1 bis 14, dadurch gekennzeichnet, daß jeder Auspack- und Klebestellenvorbereitungsstation (40; 41, 42) Entsorgungsstationen (32) mit Entsorgungsbehältern zugeordnet sind, und daß die Entsorgungsbehälter mit dem Rollwagensystem (38, 39) und dem Kransystem (30) einer zentralen Entsorgungsstation (56) zugeführt werden.

## Claims

1. An automatic installation for the introduction of rolls of paper (28) into the roll stands (44) of a web fed press
a) having a transporting system (25, 30) for conveying a roll of paper (28) from a roll store to an intermediate storage location (34),
b) having a roll transfer system (14, 38, 39) for transferring the rolls of paper (28) from the intermediate location (34) to the selected roll stand (44),
c) having lifting devices (46) for the introduction of the roll of paper (28) into the roll stand (44), and
d) having a glued join site preparation (40, 41, 42),
characterised by the following features:
e) a conveying device (25) and a crane system (30) bring the roll of paper (28) to a location of the roll store (14) in the form of a roll intermediate store with free access, the coordinates of this location being correlated with the paper roll data, namely the degree of preparation and in particular also roll weight, weight per unit area and paper quality, and together being logged and managed via data logging apparatus;
f) the crane system (30) provided in the transport intermediate store (14) transports the roll of paper (28) from the roll intermediate store (14) to a wheeled truck system (38, 39) which
f1) brings a roll of paper (28) without glued join site to the glued join site preparation (40, 41, 42) and
f2) brings a roll of paper (28) with glued join site directly to the lifting device (46) of a selected roll stand (44);
g) the wheeled truck system (38, 39) brings the fully-prepared roll of paper (28) directly to the lifting device (46) of the roll stand (44) from the glued join site preparation (40, 41, 42); or
h) the wheeled truck system (38, 39) and the crane system (30) bring the fully-prepared roll of paper (28) directly back to a location (34) of the roll intermediate store from the glued join site preparation (40, 41, 42).

2. An installation in accordance with Claim 1, characterised in that the conveying device (25) is in the form of a conveyor belt (25).

3. An installation in accordance with one of Claims 1 or 2, characterised in that barcode readers (26) are used as data logging apparatus.

4. An installation in accordance with any one of Claims 1 to 3, characterised in that a decentralised unwrapping and glued join site preparation (40) is associated with each roll stand (44) and is supplied with the rolls of paper (28) via the wheeled truck system (38).

5. An installation in accordance with any one of Claims 1 to 3, characterised in that the rolls of paper (28) are supplied through the wheeled truck system (39) to a central transfer station (41, 42) which serves as a central unwrapping and glued join site preparation station.

6. An installation in accordance with any one of Claims 1 to 5, characterised in that a roll of paper (28) which is located in a roll stand (44) and can be reused, is brought back into the roll intermediate store (14) or into another intermediate store (20) from the roll stand (44) via the rolling truck system (38, 39) and the crane system (30).

7. An installation in accordance with any one of Claims 1 to 6, characterised in that the crane system (30) is in the form of an overhead crane (30).

8. An installation in accordance with any one of Claims 1 to 7, characterised in that an additional accessible free space (34) is provided between the roll intermediate store (14) and the roll stands (44).

9. An installation in accordance with any one of Claims 5 to 8, characterised in that the central unwrapping and glued join site preparation station (41, 42) has glued join site automatic machines.

10. An installation in accordance with any one of Claims 4 to 9, characterised in that when the crane system (30) and/or the central unwrapping and glued join site preparation station (41, 42) break(s) down, the rolls of paper (28) are supplied to the decentralised transfer stations (40) or direct to the roll stands (44), and in that the paper roll preparation, inclusive of glued join site preparation, takes place manually.

11. An installation in accordance with any one of Claims 1 to 10, characterised by a redundant control system with at least two electronic computers, so that in the event of faulty functioning or breakdown of one electronic computer, the other computer assumes the control function by itself.

12. An installation in accordance with any one of Claims 1 to 11, characterised in that the crane system (30, 30') grasps the circumference of the rolls of paper (28) by means of fork-type gripping devices.

13. An installation in accordance with any one of Claims 1 to 11, characterised in that the crane system (30, 30') grasps the ends of the rolls of paper (28).

14. An installation in accordance with Claim 13, characterised in that the crane system (30, 30') grasps the ends of the rolls of paper (28) by means of spindles at the roll core.

15. An installation in accordance with any one of Claims 1 to 14, characterised in that waste disposal stations (32) with waste disposal receptacles are associated with each unwrapping and glued join site preparation station (40; 41, 42), and in that the waste disposal receptacles are conveyed to a central waste disposal station (56) by means of the wheeled truck system (38, 39) and the crane system (30).

## Revendications

1. Installation automatique pour assurer l'acheminement de bobines de papier (28) et leur mise en place sur les supports (44) prévus pour recevoir ces bobines à l'entrée d'une machine rotative d'imprimerie, comportant :
a) un système de transport (25,30) pour prendre une bobine de papier (28) à l'endroit d'un magasin de bobines et l'amener jusqu'à un magasin intermédiaire (34),
b) un système de transfert (14,38,39) pour prendre les bobines de papier à l'endroit du magasin intermédiaire (34) et les amener jusqu'aux supports choisis (44) prévus pour les recevoir à l'entrée de la machine d'imprimerie,
c) des appareils de levage (46) pour la mise en place des bobines de papier (28) dans les supports (44), et
d) un poste (40,41,42) de préparation de la plage de collage,
caractérisée par les particularités suivantes :
e) un dispositif d'acheminement (25) et un système de levage (30) pour amener les bobines de papier (28) à un emplacement du magasin d'attente (14) prévu pour constituer un magasin intermédiaire d'accès libre et commode pour la manutention des bobines, les coordonnées de cet emplacement d'attente étant systématiquement tenues à jour avec les indications concernant les bobines de papier correspondantes, à savoir le stade de préparation de chaque bobine, et en particulier le poids de celle-ci, ainsi que la qualité et le grammage de son papier, ces indications étant saisies par un appareillage approprié pour être groupées en vue de leur exploitation pour la gestion de l'installation ;
f) le système de levage (30) prévu à l'endroit du magasin intermédiaire d'attente (14) prend les bobines de papier (28) dans ce magasin intermédiaire (14) et les amène jusqu'à un système à chariots (38,39) , qui
f1) amène une bobine de papier (28) dépourvue d'une plage de collage au poste (40,41,42) de préparation de la plage de collage, et
f2) amène directement une bobine de papier (28) avec plage de collage jusqu'à l'appareil de levage (46) d'un support de bobines choisi (44) ;
g) le système à chariots (38,39) achemine la bobine de papier (28) complètement préparée depuis le poste (40,41,42) de préparation de la plage de collage directement jusqu'à l'appareil de levage (46) du support de bobines (44); ou bien
h) le système à chariots (38,39) et le système de levage (30) amènent la bobine de papier (28) complètement préparée depuis le poste (40,41,42) de préparation de la plage de collage directement en sens inverse jusqu'à un emplacement (34) du magasin intermédiaire de bobines.

2. Installation selon la revendication 1, caractérisée en ce que le système d'acheminement (25) est constitué par une bande transporteuse (25).

3. Installation selon l'une des revendications 1 ou 2, caractérisée en ce que les appareils de saisie des indications sont constitués par des lecteurs de codes-barres (26).

4. Installation selon l'une des revendications 1 à 3, caractérisée en ce qu'un poste (40) décentralisé de déballage et de préparation de la plage de collage est associé à chaque support (44) et est alimenté en bobines de papier (28) par le système à chariots (38).

5. Installation selon l'une des revendications 1 à 3, caractérisée en ce que les bobines de papier (28) sont acheminées par le système à chariots (39) d'un poste central de transbordement (41,42) qui sert de poste central de déballage et de préparation de la plage de collage.

6. Installation selon l'une des revendications 1 à 5, caractérisée en ce qu'une bobine de papier (28) déjà en place dans un support d'entrée (44) d'une machine d'imprimerie et encore réutilisable y est reprise au moyen du système de levage (30) et du système à chariots (38,39), pour être envoyée dans le magasin intermédiaire (14) des bobines, ou pour être ramenée dans un autre magasin intermédiaire (20).

7. Installation selon l'une des revendications 1 à 6, caractérisée en ce que le système de levage (30) est constitué par un pont roulant (30).

8. Installation selon l'une des revendications 1 à 7, caractérisée en ce qu'un espace libre supplémentaire et d'accès facile (34) est prévu entre le magasin intermédiaire (14) des bobines et les supports de réception (44) des bobines à l'entrée des machines d'imprimerie.

9. Installation selon l'une des revendications 5 à 8, caractérisée en ce que le poste central (41,42) de déballage et de préparation de la plage de collage comporte des automates pour préparer les plages de collage.

10. Installation selon l'une des revendications 4 à 9, caractérisée en ce que, en cas de défaillance du système de levage (30) et/ou du poste central (41,42) de déballage et de préparation de la plage de collage, les bobines de papier (28) sont envoyées aux postes décentralisés de transbordement (40) ou directement aux supports de bobines (44) et en ce qu'on effectue à la main la préparation des bobines de papier, y compris la confection de leurs plages ce collage.

11. Installation selon l'une des revendications 1 à 10, caractérisée en ce qu'elle comporte un système de commande redondant pourvu d'au moins deux calculateurs électroniques, si bien qu'en cas de fonctionnement défectueux ou de défaillance de l'un de ces calculateurs électroniques, l'autre calculateur intervient pour commander à lui seul le fonctionnement .

12. Installation selon l'une des revendications 1 à 11, caractérisée en ce que le système de levage (30,30') saisit les bobines de papier (28) par leur pourtour à l'aide d'organes preneurs à fourches.

13. Installation selon l'une des revendications 1 à 11, caractérisée en ce que le système de levage (30,30') saisit les bobines de papier (28) par leurs faces planes.

14. Installation selon la revendication 13, caractérisée en ce que le système de levage (30,30') saisit les bobines de papier (28) par leurs faces planes au moyen de doigts engagés axialement dans le noyau tubulaire de chaque bobine.

15. Installation selon l'une des revendications 1 à 14, caractérisée en ce que chaque poste (40,41,42) de déballage et de préparation de la plage de collage est desservi par des postes de récupération (32) conportant des conteneurs d'évacuation, et que les conteneurs d'évacuation sont envoyés à un poste central d'évacuation (56) au moyen du système à chariots (38,39) et du système de levage (30).
